# EUROPEAN PATENT SPECIFICATION

(11) **EP 3 593 672 B1**
(45) Date of publication and mention of the grant of the patent: **03.11.2021**
(21) Application number: 19185800.0
(22) Date of filing: 11.07.2019
(51) Int. Cl.: A47B 81/00, A47B 96/04, B62H 3/12, E04H 6/00

(54) **A MULTIPURPOSE CABINET FOR SPORTS EQUIPMENT**
MEHRZWECKSCHRANK FÜR SPORTAUSRÜSTUNG
ARMOIRE MULTIFONCTIONS POUR ÉQUIPEMENT DE SPORT

(30) Priority: 13.07.2018 IT 201800007197
(43) Date of publication of application: 15.01.2020
(73) Proprietor: Forer, Amin, 39042 Bressanone (BZ) (IT); Strickner, Paul, 39040 Racines (BZ) (IT)
(72) Inventor: Forer, Amin, 39042 Bressanone (BZ) (IT); Strickner, Paul, 39040 Racines (BZ) (IT)
(74) Representative: Sach, Greg Robert

(56) References cited:
- WO-A2-95/12334
- DE-U1- 9 418 123
- US-A- 4 125 300

## Description

### TECHNICAL FIELD

This invention concerns the technical field of sports equipment and its logistical management.

In particular, the invention refers to a cabinet for the storage of sports equipment such as skis, snowboards and bicycles.

### STATE OF THE ART

Systems for the safe storage of winter sports equipment, such as skis and snowboards, are well known in the art.

These are generally cabinets installed in the ski resorts of the valleys and/or of the mountains as well as in the special skis and bikerooms of hotels, where is it possible to store and secure the equipment.

In recent years mountain sports tourism has been developing even in the summer period characterized by the use of mountain bikes (also electric) and road bikes with which paths can be followed that allow to get to the ski resorts in the mountains.

It is well known that bicycle parking systems are installed outside stations or mountain shelters, and that these are characterized by supports fitted with locking systems.

In the known art, it is believed relevant the document DE102005028519 describing a storage device for skis and snowboards with an external cylindrical housing with a coaxial rotating access door to the housing. In an embodiment example, this document describes the possibility of dimensioning the size of the housing in such a way that two pairs of skis or at least one bicycle can be stored, particularly depending on the compartment selected, one or more objects can be stored.

It seems obvious that this solution, although creative, involves a considerable encumbrance from the functional point of view, in fact one or more compartments contain each a few objects at a time, (for example, two pairs of skis and boots or a bicycle): in case a compartment were modified to accommodate a bicycle it seems plausible that the other compartments must be similarly sized, therefore greatly increasing the size of the storage cabinet, which is very uncomfortable given the already considerable size, or limiting the capacity of other compartments. In any case, these compartments are small in size and difficult to adapt to a variety of equipment.

Additionally, the AT13900U2 and AT15273U utility models show a ski and snowboard storage cabinet with a floor provided with a water drainage system. These solutions look like simple ski cabinets, specially designed for skis and without the possibility of further uses.

Furthermore, document DE 94 18 123, a utility model of 1995, describes parking devices for bicycles or the like, designed as a cuboid, to be used in the horizontal orientation of its longitudinal extension and to be stored close to the ground, forming a storage space 2 with extension parallel to the longitudinal extension of the housing, in the side walls of the vertical planes and horizontally, plane to the ground or ceiling wall and with an opening for the storage room which can be closed by a closing door marked by a partition placed at an angle to said side walls in the housing to separate the storage space and form two spaces each for parking a single bicycle with handlebars pointing in opposite directions of the two bicycles provided in the direction of either end of the housing towards the storage areas of the cross-section, and an opening for each storage area of the storage room which can be closed by means of a closing door.

One purpose of this invention is to describe a multipurpose equipment cabinet.

One of the aims of this invention is to describe a cabinet that can accommodate alternatively skis/snowboards or bicycles.

A further purpose of this invention is to describe a cabinet with variable internal capacity.

A further purpose of this invention is to describe a cabinet with an internal dimension that can be easily and quickly adapted.

A further purpose of this invention is to describe a multi-purpose cabinet for quick, secure and theft-proof storage of equipment.

A further purpose of this invention is to describe a multipurpose cabinet that gives the possibility to heat and dry ski boots and bike shoes.

A further purpose of this invention is to describe a cabinet that allows you to charge the battery of electric bikes.

Another purpose of this invention is to describe a cabinet that can be adapted to the needs of the user.

Finally, one of the aims of this invention is to describe a compact cabinet that takes up little space and allows the content to be optimized.

### BRIEF DESCRIPTION OF THE INVENTION

These and other purposes are achieved by means of the creation of the innovative multipurpose cabinet for sports equipment comprising at least a rigid frame comprising at least a compartment for housing objects, in particular sports equipment, with at least one closing door for said structure, said multipurpose cabinet being advantageously characterized by the fact that said rigid frame comprises at least two storage compartments, each comprising a door for access from the outside, said compartments being further separated completely from each other by an inner door to provide two separate compartments for equipment, said compartments being able to form a single compartment for objects having the size of the two compartments joined at the opening of that door.

It should be noted that in a particularly advantageous way this technical solution can be applied to a variety of forms of construction of cabinets: in particular, a cabinet comprising at least two compartments can be rectangular, square, cylindrical, etc.. provided that this cabinet is divided into at least two compartments connected to each other, (or divided between them) by a central door to divide the cabinet into two compartments of substantially the same size to be used by two users (when the central door is closed) in order to benefit from the same space.

According to the invention, in the position or configuration with the central element of separation in position, or closed central door, which from here and below is defined as "winter" configuration, the multipurpose cabinet, particularly suitable for sports equipment, will be equipped, or will comprise at least a plurality of supports for ski boots, in particular in a preferred form of realization will be comprised at least supports for housing four pairs of ski boots; and in a particularly preferred variant these supports are suitable for heating and drying these boots.

Additionally, a winter storage space can advantageously accommodate at least 3 or more pairs of skis, particularly at least four pairs of skis.

In an even more advantageous way, this winter cabinet comprises at least one shelf or upper housing compartment for one or more ski helmets.

Basically, the multi-purpose cabinet in winter configuration comprises two ski compartments separated by a central separation element such as a door, and each of these compartments is suitable to accommodate at least 2 or more pairs of skis and boots, in particular at least four pairs of skis and boots, as will be visible in the attached figures.

Said cabinet shall comprise two external opening doors, one for each compartment, each of which shall comprise security devices for the storage of equipment, such as at least one key or combination lock, or padlock or similar, to ensure the safety of users.

In an even more advantageous way, said central separation element comprises means to keep it closed when the cabinet is in winter configuration, therefore it will also be equipped with locking elements such as keys, combination locks, padlocks or anything else useful for the purpose. Any variant in locking media for external and/or internal doors shall be deemed to be irrelevant for the scope of protection of this invention.

A water drain can also be provided to drain water from skis and boots.

Automatic (motion detection) or manual lighting can also be provided.

Snowboards can also be accommodated in the equipment compartments in an even more advantageous way.

Again, in the "summer configuration" version of this innovative multi-purpose cabinet for sports equipment, the two compartments comprised in the cabinet structure will be connected to each other by opening the central separation element, called the central door. In particular, in an advantageous way this door can be realized in a plurality of preferred forms of realization, for example it can be a hinged door that can be opened only in one direction of opening, or in two directions of opening, to remain housed in one or the other compartment of the cabinet; or even the door can be made with a bellows, so it slides towards the ceiling of one or other compartment of the cabinet, or towards one or more sides of the compartments of the cabinet, allowing to gain even more space, or it can be made for example with bellows remaining folded without occupying significant space in the central area between the two compartments (more details will be described with reference to the attached figures) . Also in this case it is not relevant for the purposes of this invention which type of door is chosen, these doors are known and the hinges of articulation or mechanisms used for their operation is also known. It is interesting and particularly innovative in the context of this invention the application of this technical solution to provide in a simple and immediate way a sports equipment cabinet immediately larger without changing in any way the position of the cabinet or the cabinet itself.

In particular, therefore, in the "summer configuration" it will be possible to extract the shelves when necessary to house the helmets and to hook one or more hooks to the ceiling of the cabinet, to safely hang and house at least one bicycle. It is clear that depending on the size of the cabinet in terms of width, at least a second hook can be hung to accommodate a second bike in the same cabinet.

In an even more advantageous way, the boot carriers can remain in place even in summer, this is all to the advantage of the ease of use of the cabinet and in an even more innovative way these means can be used to house the bicycle shoes, and also in an even more advantageous way, to dry quickly the bicycle shoes. This is to the advantage of the users and of the hygiene of the multipurpose cabinets, as avoiding the stagnation of humidity it is guaranteed that there are no bad smells, molds and anything else that is not pleasant.

In addition, disinfection of sports footwear by means of such drying media may also be provided for. For example, if these services are offered on behalf of third parties, hotels or facilities that rent such cabinets, the increased hygiene of the same may be a highly appreciated factor.

In the summer configuration, therefore, the cabinet will remain open from one or the other side of the same, or both depending on the choice of the user or service provider.

A cabinet ventilation system can also be advantageously present.

In particular, it is also possible to create a multicompartment cabinet, for example, where four separate compartments, coupled two by two, form a single cabinet such as rectangular or square or cylindrical, etc..

In this case it is possible to foresee that all the internal separation walls - which in the winter configuration allow to have four lockers/housing compartments - can be removed or opened, so as to form two compartments of double dimensions compared to a single compartment, or a single compartment of dimensions of all four compartments joined together.

On the basis of this, it is possible to imagine countless forms of construction of multipurpose cabinets for equipment as long as they comprise elements separating the removable or openable internal compartments to join one or more compartments with at least one adjacent compartment.

Furthermore, by creating a cabinet with an adequate height, it is possible to keep the support shelf for helmets or other items in place by attaching one or more bicycle hooks to the support shelf itself, which will be equipped with appropriate means of attachment. In this way, said shelf remains advantageously usable to store even bicycle helmets or knee pads and so forth.

It is immediately evident that the innovative multi-purpose cabinet for sports equipment is able to solve all the problems of the known art, achieving the aims of the invention and providing remarkable advantages.

### BRIEF DESCRIPTION OF THE FIGURES

These and other advantages obtained by virtue of the innovative multipurpose cabinet for sports equipment will be even better described with reference to one or more forms of construction as shown in the attached figures in which:
in fig.1a it is represented a vertical lateral section view of a preferred form of realization of the multipurpose cabinet described by the present invention;
in fig. 1b it is represented a horizontal section view of a preferred form of realization of the present invention;
fig. 2 shows a frontal section view of a form of realization in winter configuration of the present invention;
in fig. 3 it is represented a frontal section view of a form of realization in summer configuration of the present invention;
and in fig. 4a and 4b there are represented two horizontal section views of particularly preferred forms of realization with details of the central door of the present invention.

### DETAILED DESCRIPTION OF THE FIGURES

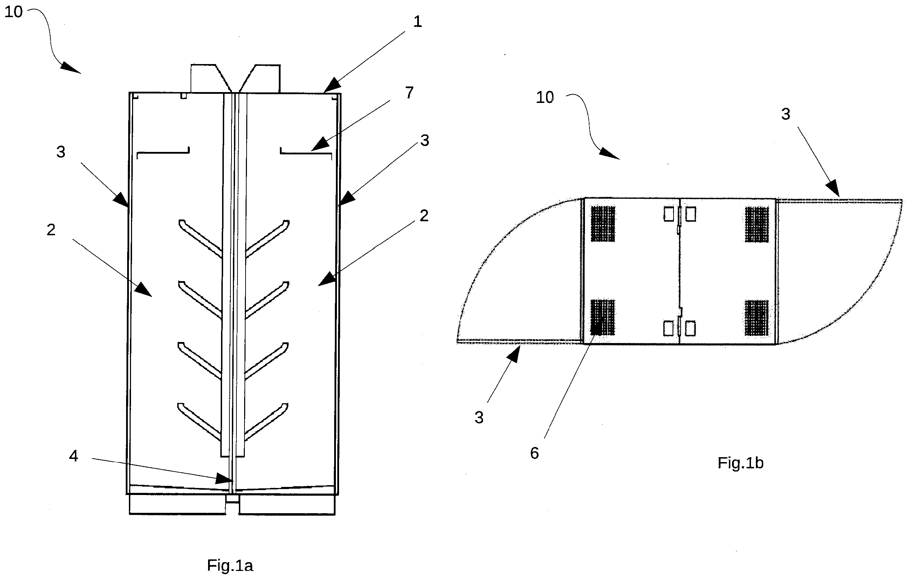

In particular, with reference to said figures, which are intended to be an example of an explicative and non limitative form of realization of the present invention, in figure 1a is represented a side section view of a multipurpose cabinet 1 innovatively realized according to a preferred form of realization of the present invention. In this case, this cabinet 10 comprises at least a rigid frame 1 comprising at least two compartments 2 for sports equipment, in particular these compartments are divided - or may be divided by means of at least one separating element 4, or separating door 4 - to form two independent compartments which are usable and accessible from the relevant external doors 3. Each of these compartments comprise, in the present form of construction, ski boot holders 5 (or shoe holders in summer configuration).

In particular, here are represented four rows of boot holders 5 in each compartment 2, to accommodate in each compartment 2 at least four pairs of ski boots (or bicycle shoes). In a particularly preferred form of construction, these holding means for shoes or boots are suitable for emitting a flow of air to dry the shoes housed there, and possibly to dispense an antibacterial product, with the consequent advantages described above.

Furthermore, this cabinet 10 can comprise holes on the bottom to allow leakage of water from skis and boots when the snow that remains attached to them melts.

A drain channel may or may not be provided for, this does not alter the scope of protection of the present invention.

In fig.1b it is represented a top view of the same form of realization of fig.1a in which the multipurpose cabinet 10 is made with two separate compartments, here are clearly visible external doors 3 to access the compartments 2, the central element of separation 4 or door seen from above and ventilation compartments 6 that can be made on the ceiling of the multipurpose cabinet 10.

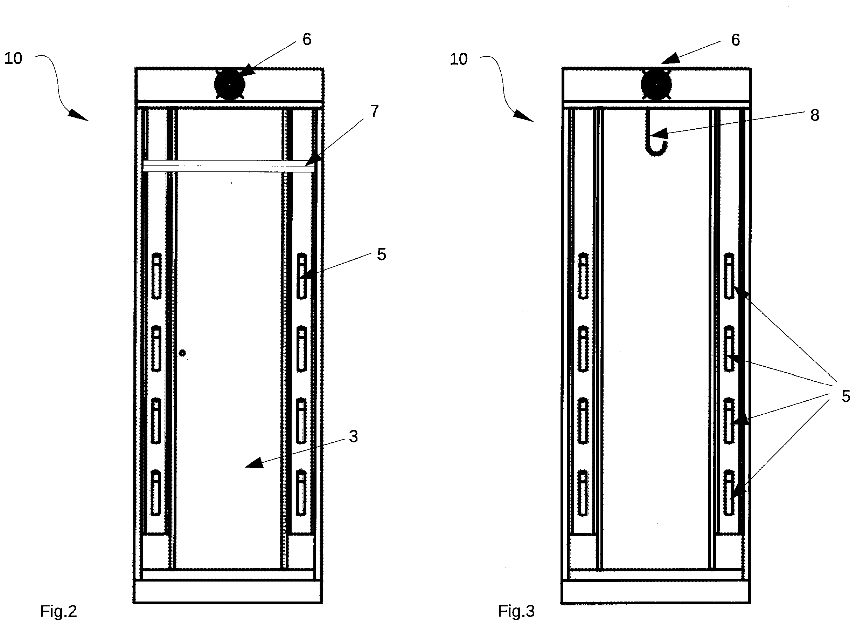

In fig.2 and 3 are visible two frontal views, with external door open, of an example of respectively winter (fig.2) and summer (fig.3) configuration of the multipurpose cabinet 10 described by the present invention. In particular, it is possible to see the internal door 4, closed, in a hinged door construction, boot carriers or sports shoe carriers means 5, for example for bicycles, a ventilation compartment 6 (in this view) and in the summer configuration there is at least one hook 8 to house at least one bicycle hanging in a vertical position, with one of the wheels hanging from said hook 8. As said, depending on the form of realization can be provided a plurality of hooks 8 for hanging side by side more bikes, and moreover said hooks can be connected to said shelf 7 without removing it if the cabinet 10 is made high enough to accommodate bicycles and also contain said shelf 7.

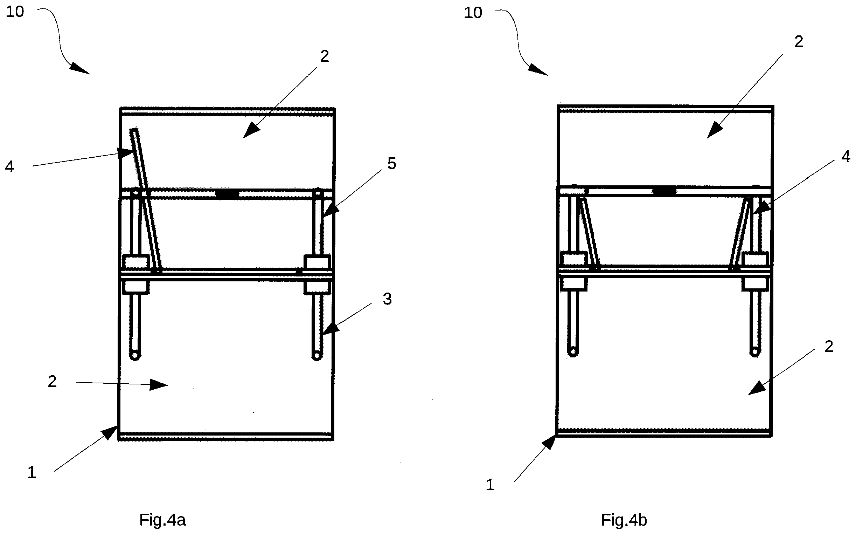

Figs. 4a and 4b there are represented in particular two sectional views from above of particularly preferred forms of construction of the central separation element 4 or door 4. In particular, figure 4a shows a door with a hinged opening, which opens (here in the figure) from one side of cabinet 10, remaining housed in one of the two compartments 2. In an advantageous way, the door is hinged so that it can remain housed in a position that allows the shoes to be placed on the supports and at least one bike hung centrally.

Note that it is possible to make the hinged door with opening from one side only, or from both sides by equipping it, for example, with hinges for opening at 180 degrees in a bidirectional way.

Figure 4b shows a form of construction with a door with double hinged opening divided in the central part, in this way the two sides of the door remain shorter and less cumbersome; identically the double hinged door can be made with opening from one side only, or from both sides by providing it with hinges for opening at 180 degrees in a bidirectional way, for example.

According to the invention, it is possible to use any door, as long as it is suitable for the purpose, so that it is also possible to use folding or bellows doors with single or double hinge divided in the middle, so that the encumbrance of the door remains null, the door remains housed, when opened, in the area of connection between the two compartments without providing any encumbrance.

Or again, the door can be of the folding type, with opening towards the top, and then disappearing of the door in relation to the ceiling of the cabinet, or a folding door with side openings, therefore a retractable door on one side of at least one compartment of the rigid frame 1 of the cabinet 10.

As said, therefore, in a very advantageous way, in this way the same cabinet can be used both for skis and snowboards in winter and for bicycles in summer.

Further advantages are the heating and drying of ski/snowboard boots and cycling shoes. These means 5 are positioned so that the heaters do not have to be removed for summer use and as mentioned above can also be used in summer to dry the cycling shoes.

Advantageously, a key locking system can be provided, with code numbers, with the hotel locking system or using the skipass card.

In an even more advantageous way, a water drain for skis and boots can be comprised, and moreover means of ventilation can be comprised, in addition to for example a lighting system with on/off system.

Again, as mentioned above, the shape of the rigid frame 1 of the cabinet is immaterial, as is the size of the cabinet and the compartments comprised and created therein, two or more compartments, provided that they can be joined together by opening the internal elements of separation, thus creating compartments of different sizes according to the needs of the user. Therefore, innovative multi-purpose cabinets 10 can be made for equipment of any shape and size, as long as they comprise separating elements between the removable or openable internal compartments to join one or more compartments with at least one adjacent compartment.

It is clear that the innovative multipurpose cabinet 10 described by this invention allows to achieve all the purposes described, therefore variations in materials used for the realization of the cabinet, type of content, height, width, shape, presence or absence of accessories such as shelves, hooks, support elements, lights, etc.. are considered mere forms of realization and comprised in the scope of protection of this invention as better described by the attached claims.

## Claims

1. A multi-purpose cabinet (10) for sports equipment comprising at least one rigid frame (1) comprising a housing compartment for objects, in particular sports equipment, equipped with at least one closing door (3) for said compartment of said rigid frame (1), wherein said rigid frame (1) comprises at least two compartments (2) for objects, each comprising at least one closing door (3) to access it from the outside, said compartments (2) being further separated completely from each other at least by one separating element (4), for providing two compartments (2) for separate equipment, said at least two compartments (2) being adapted to form a single compartment of the compartment dimensions of both compartments (2) connected together by the opening of said separating element (4), wherein said cabinet (10) comprises at least a winter and a summer configuration, and in both configurations said cabinet comprises in each compartment (2) two or more supports (5) for ski boots and/or bicycle shoes, said supports being adapted to heat and disinfect said shoes or boots, **characterized in that** the separating element (4) is an inner door that can be closed in winter configuration or opened in the summer configuration remaining housed in the cabinet to provide respectively two completely separated compartments or a single compartment.

2. The multi-purpose cabinet (10) for sports equipment according to claim 1, wherein said rigid frame (1) comprises any number of compartments of any shape (2) divided by one or more separating elements (4).

3. The multi-purpose cabinet (10) for sports equipment according to the preceding claims, wherein said frame (1) of said cabinet and said compartments may have any shape, square, rectangular, cylindrical, etc.

4. The multi-purpose (10) cabinet for sports equipment according to the preceding claims, wherein said separating element (4) may be a single hinged door, or a double hinged door, which can be opened in one or the other compartment with a 180-degree opening, or be a folding door and/or a rolling door with vertical or lateral opening.

5. The multi-purpose cabinet for sports equipment according to the preceding claims, wherein said frame (1) is divided into at least two compartments (2) divided by at least one separating element (4) located centrally for dividing the cabinet into at least two compartments (2) having substantially the same size to be used by two users to benefit from the same space for storing sports equipment in a "winter" configuration, said at least two compartments (2) being connected to each other at the opening of said separating element (4) to be used as a single compartment (1) at least by one user for storing sports equipment in a "summer" configuration.

6. The multi-purpose cabinet for sports equipment according to the preceding claims, wherein said cabinet comprises in a "summer" configuration at least one hook (8) for housing a bicycle hanging from said hook (8) .

7. The multi-purpose cabinet for sports equipment according to the preceding claims, wherein said cabinet comprises in "winter" configuration at least one shelf (7) for housing equipment such as ski helmets or other and lateral spaces for housing at least a plurality of pairs of skis or snowboards in each compartment.

8. Multi-purpose cabinet for sports equipment according to the preceding claims, wherein said shelf (7) is also included in a "summer" configuration and comprises placed to house at least one or more hooks to house at least one or more bicycles hanging from said hooks.

9. The multi-purpose cabinet for sports equipment according to the preceding claims, wherein said cabinet further comprises at least aeration vents (6) and/or drain holes for water and/or manual or automatic lighting means in each of said compartments and/or secure locking means for said external doors (3) and internal separation element (4) such as keys, combination locks and/or padlock or similar.

## Patentansprüche

1. Ein Mehrzweckschrank (10) für Sportgeräte mit mindestens einem starren Rahmen (1) mit einem Gehäusefach für 5 Gegenstände, insbesondere Sportgeräte, ausgestattet mit mindestens einer verschließbaren Tür (3) für das oben genannte Fach des starren Rahmens (1), wobei der vorgenannte starre Rahmen (1) mindestens zwei Fächer (2) für Gegenstände umfasst, die jeweils mindestens mit einer von außen zugänglichen Schließtür (3) ausgestattet sind, wobei die oben genannten Fächer (2) ferner mindestens durch ein Trennelement (4), vollständig voneinander getrennt sind, um zwei Fächer (2) für separate Ausrüstung bereitzustellen, wobei die mindestens zwei Fächer (2), die angepasst sind, um ein einzelnes Fach mit den Fachabmessungen beider Fächer (2) zu bilden, die durch die Öffnung des vorgenannten Trennelements (4), miteinander verbunden sind, wobei der oben erwähnte Schrank (10) mindestens eine Winter- und eine Sommerkonfiguration umfasst, und in beiden Konfigurationen der oben genannte Schrank in jedem Fach (2) zwei oder mehr Träger (5) für Skischuhe und/oder Fahrradschuhe umfasst, wobei die oben genannten Träger angepasst sind, um die Schuhe oder Stiefel zu erwärmen und zu desinfizieren, **dadurch gekennzeichnet, dass** das Trennelement (4) eine Innentür ist, die im Winterbetrieb geschlossen oder im Sommerbetrieb geöffnet werden kann und im Schrank untergebracht bleibt, um jeweils zwei vollständig getrennte Fächer oder ein einzelnes Fach bereitzustellen.

2. Der Mehrzweckschrank (10) für Sportgeräte nach Anforderung 1 soll **dadurch gekennzeichnet** werden, dass der starre Rahmen (1) eine beliebige Anzahl beliebig geformter Fächer (2) umfasst, die durch ein oder mehrere Trennelemente (4) unterteilt sind.

3. Der Mehrzweckschrank (10) für Sportgeräte nach den vorhergehenden Anforderungen soll **dadurch gekennzeichnet** werden, dass der oben erwähnte Rahmen (1) des vorgenannten Schranks und die vorgenannten 30 Fächer jede beliebige Form haben können, zwar quadratisch, rechteckig, zylindrisch usw.

4. Der Mehrzweckschrank (10) für Sportgeräte nach den vorhergehenden Anforderungen soll **dadurch gekennzeichnet** werden, dass das oben erwähnte Trennelement (4) entweder eine einflügelige Tür oder eine zweiflügelige Tür sein kann, die in dem einen oder anderen Fach mit einer 180-Grad-Öffnung geöffnet werden kann, oder ein Falttor und/oder ein Rolltor mit vertikaler oder seitlicher Öffnung sein kann.

5. Der Mehrzweckschrank für Sportgeräte nach den vorhergehenden Anforderungen soll **dadurch gekennzeichnet** werden, dass der oben erwähnte Rahmen (1) in mindestens zwei Fächer (2) unterteilt ist, die durch mindestens ein mittig angeordnetes Trennelement (4) zur Unterteilung des Schranks in mindestens zwei Fächer (2) mit im Wesentlichen den gleichen Abmessungen, die von zwei Benutzern verwendet werden können, um den gleichen Raum zum Aufbewahren von Sportgeräten in einer "Winter"-Konfiguration zu nutzen, wobei die vorstehend genannten mindestens zwei Fächer (2) an der Öffnung des vorgenannten Trennelements (4), zur Verwendung als einzelnes Fach (1) zumindest durch einen Benutzer zum Aufbewahren von Sportgeräten in einer "Sommer"-Konfiguration, miteinander verbunden sind.

6. Der Mehrzweckschrank für Sportgeräte nach den vorhergehenden Anforderungen soll **dadurch gekennzeichnet** werden, dass der oben erwähnte Schrank in einer "Sommer"-Konfiguration mindestens einen Haken (8) zum Aufnehmen eines an dem oben genannten Haken (8) hängenden Fahrrads aufweist.

7. Der Mehrzweckschrank für Sportgeräte nach den vorhergehenden Anforderungen soll **dadurch gekennzeichnet** werden, dass der vorgenannte Schrank in der "Winter"-Konfiguration mindestens eine Ablage (7) zum Aufbewahren von Ausrüstungsgegenständen wie Skihelmen oder anderen und seitliche Räume zum Aufbewahren von mindestens mehreren Paar Ski oder Snowboards in jedem Abteil aufweist.

8. Der Mehrzweckschrank für Sportgeräte nach den vorhergehenden Anforderungen soll **dadurch gekennzeichnet** werden, dass die oben genannte Ablage (7) auch in einer "Sommer"-Konfiguration enthalten ist und angeordnet ist, um mindestens einen oder mehrere Haken aufzunehmen, um mindestens ein oder mehrere Fahrräder am besagten Haken aufzuhängen.

9. Der Mehrzweckschrank für Sportgeräte nach den vorhergehenden Anforderungen soll **dadurch gekennzeichnet** werden, dass der vorgenannte Schrank ferner mindestens Belüftungsöffnungen (6) und/oder Ablauflöcher für Wasser und/oder manuelle oder automatische Beleuchtungsmittel in jedem der Fächer und/oder oder sichere Verriegelungsmittel für die Außentüren (3) und das Innentrennelement (4) wie Schlüssel, Kombinationsschlösser und/oder Vorhängeschloss oder ähnliches aufweist.

## Revendications

1. Armoire polyvalente (10) pour équipements sportifs comprenant au moins un châssis rigide (1) comprenant un compartiment de logement pour 5 objets, notamment des équipements sportifs, équipé d'au moins une porte de fermeture (3) pour ledit compartiment dudit châssis rigide (1) dans lequel ledit châssis rigide (1) comprend au moins deux compartiments (2) pour objets, chacun comprenant au moins une porte de fermeture (3) pour y accéder de l'extérieur, lesdits compartiments (2) étant en outre complètement séparés l'un de l'autre par au moins un élément de séparation (4), pour fournir deux compartiments (2) pour un équipement séparé, lesdits au moins deux compartiments (2) étant adaptés pour former un seul compartiment aux dimensions du compartiment des deux compartiments (2) reliés entre eux par l'ouverture dudit élément de séparation (4), dans lequel ladite armoire (10) comprend au moins une configuration hiver et une configuration été, et dans les deux configurations ladite armoire comprend dans chaque compartiment (2) deux ou plusieurs supports (5) pour chaussures de ski et/ou chaussures de vélo, lesdits supports étant adaptés pour chauffer et désinfecter lesdites chaussures ou bottes, **caractérisée en ce que** l'élément de séparation (4) est une porte intérieure pouvant être fermée en configuration hiver ou ouverte en configuration été restant logée dans l'armoire pour offrir respectivement deux compartiments complètement séparés ou un seul compartiment.

2. Armoire polyvalente (10) pour équipement sportif selon la revendication 1, dans laquelle ledit châssis rigide (1) comprend un nombre quelconque de compartiments de forme quelconque (2) divisés par un ou plusieurs éléments de séparation (4).

3. Armoire polyvalente (10) pour équipement sportif selon les revendications précédentes, dans laquelle ledit châssis (1) de ladite armoire et 30 desdits compartiments peuvent avoir toute forme, carrée, rectangulaire, cylindrique, etc.

4. Armoire polyvalente (10) pour équipement sportif selon les revendications précédentes, dans laquelle ledit élément de séparation (4) peut être une porte battante simple, ou une porte battante double, qui peut être ouverte dans l'un ou l'autre compartiment avec une ouverture à 180 degrés, ou être une porte pliante et/ou une porte roulante à ouverture verticale ou latérale.

5. L'armoire polyvalente pour équipement sportif selon les revendications précédentes, dans laquelle ledit châssis (1) est divisé en au moins deux compartiments (2) divisés par au moins un élément de séparation (4) situé au centre pour diviser l'armoire en au moins au moins deux compartiments (2) ayant sensiblement la même dimension pour être utilisés par deux utilisateurs pour bénéficier du même espace de rangement d'équipements sportifs en configuration "hiver", lesdits au moins deux compartiments (2) étant reliés entre eux à l'ouverture dudit élément de séparation (4) destiné à être utilisé comme compartiment unique (1) par au moins un utilisateur pour ranger des équipements sportifs dans une configuration "été".

6. L'armoire polyvalente pour équipement sportif selon les revendications précédentes, dans laquelle ladite armoire comprend dans une configuration "été" au moins un crochet (8) pour loger un vélo suspendu audit crochet (8).

7. L'armoire polyvalente pour équipements sportifs selon les revendications précédentes, dans laquelle ladite armoire comprend en configuration "hiver", au moins une étagère (7) pour loger des équipements tels que des casques de ski ou autres et des espaces latéraux pour loger au moins une pluralité de paires de skis ou de snowboards dans chaque compartiment.

8. L'armoire polyvalente pour équipement sportif selon les revendications précédentes, dans laquelle ladite étagère (7) est également comprise dans une configuration "été" et comprend un espace pour loger au moins un ou plusieurs crochets pour loger au moins un ou plusieurs vélos suspendus auxdits crochets.

9. L'armoire polyvalente pour équipement sportif selon les revendications précédentes, dans laquelle ladite armoire comprend en outre au moins des bouches d'aération (6) et/ou des trous d'évacuation d'eau et/ou des moyens d'éclairage manuels ou automatiques dans chacun desdits compartiments et/ou des moyens de verrouillage sécurisés pour lesdites portes externes (3) et l'élément de séparation interne (4), tels que des clés, serrures à combinaison et/ou cadenas ou similaires.
